(19) Europäisches Patentamt
European Patent Office
Office européen des brevets

(11) Publication number: 0 123 230
B1

(12) **EUROPEAN PATENT SPECIFICATION**

(45) Date of publication of patent specification: **19.08.87**

(51) Int. Cl.⁴: **D 21 H 5/12,** B 32 B 29/00

(21) Application number: **84104178.3**

(22) Date of filing: **13.04.84**

(54) **Cushioning material for hot press laminating and press molding.**

(30) Priority: **15.04.83 JP 66628/83**

(43) Date of publication of application:
**31.10.84 Bulletin 84/44**

(45) Publication of the grant of the patent:
**19.08.87 Bulletin 87/34**

(84) Designated Contracting States:
**DE FR GB**

(56) References cited:
**EP-A-0 073 668**
**GB-A-2 014 208**

**ABSTRACT BULLETIN OF THE INSTITUTE OF PAPER CHEMISTRY, vol. 50, no. 9, March 1980, page 954, abstract no. 8871, Appleton, Wisc., US**

**ABSTRACT BULLETIN OF THE INSTITUTE OF PAPER CHEMISTRY, vol. 48, no. 6, December 1977, page 704, abstract no. 6513, Appleton, Wisc., US**

(73) Proprietor: **MITSUBISHI PAPER MILLS, LTD.**
**4-2, Marunouchi 3-chome**
**Chiyoda-ku Tokyo 100 (JP)**
(73) Proprietor: **Nippon Aroma Co., Ltd.**
**4-2, Marunouchi-3-chome Chiyoda-ku**
**Tokyo (JP)**
(73) Proprietor: **NITTO BOSEKI CO., LTD.**
**1 Aza Higashi Gonome**
**Fukushima-shi Fukushima-ken (JP)**

(72) Inventor: **Yamaya, Eisuke Mitsubishi Paper Mills, Ltd.**
**Chuokenkyusho 4-1, Higashikanamachi 1-chome**
**Katsushika-ku Tokyo (JP)**
Inventor: **Yamamoto, Osamu**
**74-5, Bentencho**
**Chiba-shi (JP)**
Inventor: **Koike, Takashi**
**Nippon Aroma Co., Ltd. 4-2, Marunouchi 3-chome**
**Chiyoda-ku Tokyo (JP)**
Inventor: **Seino, Shunji**
**Nippon Aroma Co., Ltd. 4-2, Marunouchi 3-chome**
**Chiyoda-ku Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 123 230 B1

Courier Press, Leamington Spa, England.

(56) References cited:
ABSTRACT BULLETIN OF THE INSTITUTE OF PAPER CHEMISTRY, vol. 52. no. 11, May 1982, page 1354, abstracts no. 12881 and 12882, Appleton, Wisc., US

ABSTRACT BULLETIN OF THE INSTITUTE OF PAPER CHEMISTRY, vol. 51, no. 4, October 1980, page 468, abstract no. 4266, Appleton, Wisc., US

(74) Representative: Hansen, Bernd, Dr.rer.nat. et al
Hoffmann, Eitle & Partner Patentanwälte
Arabellastrasse 4
D-8000 München 81 (DE)

**Description**

This invention relates to a cushioning material for hot press laminating and press molding, more particularly to a heat-resistant cushioning material for hot press laminating and press molding which is comprised of an inorganic fiber and pulp-like particles of a heat-resistant aromatic polymer.

Paper-phenol resin laminates, glass cloth-epoxy resin laminates, etc. are produced by impregnating a base sheet of paper, glass cloth, or the like with a resin, precuring the impregnated base sheet to form a so-called B-staged prepreg, piling up necessary sheets of the B-staged prepreg, superimposing thereon, as necessary, a decorative paper, a copper clad or foil or the like, placing the thus prepared laminated between two plates with mirror surface, placing them between two hot press-plates with a cushioning material used between the plates with mirror surface and the hot press-plates, and curing the resin penetrated into the base sheet under heating and pressure application.

As the cushioning material for the above purpose, there are now in use single or composite materials of an unwoven cloth, a woven cloth, a paper, etc. in the form of laminate of a desired thickness.

These cushioning materials have had essential drawbacks in that, when they are repeatedly used under high temperatures and high pressure conditions, decrease in modulus of elasticity markedly reduces thickness, whereby porosity is reduced and initial cushioning characteristics are impaired and further change in rate of thermal conduction makes heat distribution non-uniform and life of use is shortened.

Other cushioning materials are proposed which are produced by impregnating an unwoven cloth comprised of an aromatic polyamide fiber with a resin or the like and attaching thereto an aromatic polyamide unwoven cloth not impregnated with a resin by the use of an adhesive to form an integral body, or by fusion-bonding a resin film to one side of an aromatic polyamide unwoven cloth (Japanese Utility Model Application Kokai (Laid-open) Nos. 7646/1983 and 7648/1983).

Because these cushioning materials use aromatic polyamide fibers, they are superior in heat resistance, however, reduction in thickness during use due to heat and pressure is conspicuous. They are superior to other conventional cushioning materials in reduction in cushioning properties during use, however, their life of use is not sufficient. Further, because they are laminates produced from unwoven cloths, they are inferior in precision of thickness.

The object of this invention is to provide a cushioning material for hot press laminating and press molding, which is very superior in cushioning properties and further satisfy other requirements of mechanical strength, heat resistance and durability. This object of the present invention has been achieved by a cushioning material for hot press laminating and press molding which uses (a) an inorganic fiber possessing the physical properties described hereunder and (b) pulp-like particles of a heat-resistant aromatic polymer possessing the physical properties described hereunder.

The present invention relates to a heat-resistant cushioning material for hot press laminating and press molding produced by mixing a fine inorganic fiber essentially free from shots and having fiber diameters of 0.5 to 15 µm and fiber lengths of 70 to 1,000 µm with fibers of a heat-resistant aromatic polymer having a freeness value of 150 to 500 sec, (determined by preparing an aqueous dispersion of the fibers, containing 0.3% of the fibers at 20°C, transferring one liter of said dispersion into a cylindrical vessel of 102 mm inside diameter which has a wire net of 78 mesh at the bottom, and measuring the time required for obtaining 500 ml of a filtrate), making the mixture into an aqueous slurry, making a wet paper from the slurry by a paper-making process, adjusting the water content of the wet paper to 50 to 95%, piling up necessary sheets of the wet paper and subjecting them to dehydration and drying under heating and pressure application to form an integral body.

Preferred embodiments of the present invention will be explained hereinunder. The preferred porosity of the cushioning material of the present invention is 50 to 75%. This cushioning material may be used as it is. Also, it may be used in a form wherein the cushioning material is used as a core material and, to one side or both sides of the material, there are attached a copper clad or foil, an aluminum clad or foil, a heat-resistant unwoven cloth or a releasing layer or there is applied a treatment for release. Further, the cushioning material of the present invention may be used in a form wherein it is attached to both sides of a heat-resistant unwoven cloth, a rubber sheet or the like, to form an integral body. Furthermore, the present cushioning material may be fortified by coating thereon a thermosetting resin (e.g. a thermosetting silicone varnish, polyamide-imide varnish and aromatic polyamide varnish) or attaching thereto a heat-resistant clothg (e.g. a cloth comprised of an aromatic polyamide fiber) with an adhesive (e.g. an aromatic polyamide varnish), polyamide-imide varnish and thermosetting silicone varnish).

The cushioning material of the present invention using a fine inorganic fiber and pulp-like particles of an aromatic polymer advantageously exhibits excellent cushioning properties, because (1) these two raw materials have greatly different modulus of elasticity (the former has a higher modulus of elasticity than the latter) and (2) the two materials differ greatly in shape and a combination of these different shapes creates a high porosity.

Generally in cushioning materials comprised only of polymers, because both the fiber and the pulp-like particles are made of one same polymer, the fiber and the particles are compatible with each other and their modulus of elasticity are lower than those inorganic fibers. Consequently, there exist much fewer spaces between the fiber and the particles and the cushioning properties are not satisfactory.

The inorganic fiber meant in the present invention is a rock wool, a ceramic fiber, a glass fiber or the

like. A fiber having diameters of 0.5 to 15 μm and lengths of 70 to 1,000 μm is used. It is requisite that the fiber be free from non-fibrous materials, namely, shots which could not be made into a fiber at fiberizing process. When shots are contained, such fiber has a poor touch, tends to cause shots separation and has a lower strength. Further, the cushioning material made of such shot-contained fiber damages plates with mirror surface.

When the fiber diameters are less than 0.5 μm the resulting cushioning material has a lower porosity. When they exceed 15 μm the inorganic fiber projects from the surface of the cushioning material and the cushioning material has a poor touch. When the fiber lengths are less than 70 μm, the yield of paper making is low and the resulting cushioning material has inferior physical characteristics, which is not practical. When the fiber lengths exceed 1,000 μm uniform dispersion in water becomes inferior markedly; there occurs entangling among fibers; and the resulting cushioning material becomes inferior in thickness uniformity and surface smoothness and tends to cause curling.

The pulp-like material of a heat-resistant aromatic polymer used in the present invention is composed of an aromatic polyamide and/or an aromatic polyamide-imide. Their examples include the following.

(1) Aromatic polyamide

The aromatic polyamide has a structural unit represented by the following general formula (1) and/or (2) and its main chain comprises essentially aromatic groups:

$$-NH-Ar_1-NH-CO-Ar_2-CO- \qquad (1)$$

$$-NH-Ar_3-CO- \qquad (2)$$

wherein $Ar_1$, $Ar_2$ and $Ar_3$ each are a bivalent aromatic group and may be same or different.

Typical examples of these aromatic polyamides include a poly(m-phenylene isophthalamide), a poly(m-phenylene terephthalamide), a poly(p-phenylene terephthalamide), a poly(p-phenylene isophthalamide), a poly(4,4'-oxydiphenylene isophthalamide), a poly(4,4'-oxydiphenylene terephthalamide), a poly(m -benzamide), a poly(p-benzamide), etc. The aromatic polyamide used in the cushioning material of the present invention may be copolymers of the above mentioned aromatic polyamides and also may contain, in addition to the above mentioned aromatic groups, small amounts of other components such as, for example, piperazine, cyclohexane dicarboxylic acid and the like.

(2) Aromatic polyamide-imide

The aromatic polyamide-imide has a structural unit represented by the following general formula:

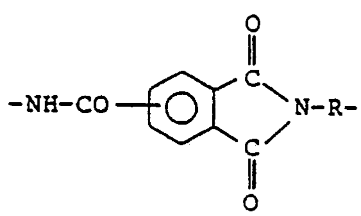 wherein R is 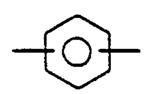 or 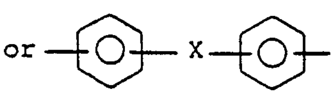

in which X is $-O-$, $-SO_2-$, $-\underset{\underset{O}{\|}}{C}-$ or a lower alkylene group.

The pulp-like particles used in the present invention refer to particles of fiber thin film or ribbon form having numerous projections, from which a structure similar to paper can be made by the use of a paper machine. These particles can be produced by introducing a solution of an aromatic polymer into a precipitating agent to precipitate the polymer in the form of fine particles. An example of producing these particles is described in Japanese Patent Publication No. 5732/1962. However, the particles can also be produced by other methods. It is sufficient that the particles used in the present invention are those defined above and having an ability of making a wet paper.

In the present invention, fibers of said polymer having a freeness value of 150 to 500 sec as measured by a method described later are used. Those having a freeness value of 160 to 400 sec is preferable.

When the fibers have a freeness value of less than 150 sec and are coarse, they have too long fiber lengths and disadvantages are incurred such as (a) an aqueous slurry containing these particles and an inorganic fiber gives a very poor dispersibility and (b) a resulting wet paper always exhibits a poor formation and a low physical strength.

When the pulp-like particles have a freeness value exceeding 500 sec and are very fine, the above mentioned aqueous slurry gives a good dispersibility, however, a resulting wet paper shows a poor water separatability which is not advantageous from the standpoint of paper making efficiency.

Incidentally, the freeness value meant in the present invention is a value used for evaluating the water

leakiness of a pulp which is obtained by the following test method. That is, fibers are made into an aqueous dispersion containing 0.3% of the fibers of 20°C. One liter of the dispersion is taken. The slurry is transferred into a cylindrical vessel of 102 mm inside diameter which has a wire net of 78 mesh at the bottom, and a time required for obtaining 500 ml of a filtrate is measured. The time expressed in second is a freeness value.

As described previously, the heat-resistant cushioning material for hot press laminating and press molding according to the present invention can be produced by mixing a fine inorganic fiber essentially free from shots and having fiber diameters of 0.5 to 15 μm and fiber lengths of 70 to 1,000 μm with pulp-like particles of a heat-resistant aromatic polymer having a freeness value of 150 to 500 sec, making the mixture into an aqueous slurry, making a wet paper from the slurry by a paper-making process, adjusting the water content of the wet paper to 50 to 95%, piling up necessary sheets of the wet paper and subjecting them to dehydration and drying under heating and pressure application to form an integral body. The mixing ratio of the fine inorganic fiber and the pulp-like particles of a heat-resistant aromatic polymer is optionally selected within the range of 50:50 to 95:5 (weight basis).

In the present invention, pulp-like particles of an aromatic polymer and an inorganic fiber are mixed and made into an aqueous slurry. Then, a wet paper is prepared from the slurry by the use of a paper machine of Fourdrinier, cylinder, inclined wire or other type. The wet paper is adjusted to a water content of 50 to 95% by suction or pressing. When the wet paper has a water content less than 50%, the resulting cushioning material obtained by piling up necessary sheets of the wet paper and drying them has a weak bonding between sheets and does not provide an integral material. When the wet paper has a water content more than 95%, the wet paper easily causes deformation, therefore, piling up is difficult and cracks are formed during heating and pressure application.

Appropriate sheets of the wet paper prepared above are piled up so as to match the desired thickness of a cushioning material. Then, they are subjected to dehydration and drying under heating and pressure application.

The heating is conducted at the softening point of the aromatic polymer or at a lower temperature. Economically, 100° to 200°C is preferable. The pressure application is conducted at 0.98 to 5.88 MPa (10 to 60 kg/cm$^2$), preferably 0.98 to 4.41 MPa (10 to 45 kg/cm$^2$).

Thus, there is produced a cushioning material which has a sufficient bonding among paper layers, processes a uniform and integral structure and is superior in cushioning properties, mechanical strength, heat resistance and durability.

Preparation 1

10 parts of a polymethaphenylene isophthalamide giving an intrinsic viscosity of 1.5 in sulfuric acid was dissolved in 90 parts of N,N-dimethylacetamide containing 5 parts of lithium chloride (LiCl). This solution was introduced into an aqueous glycerine solution being stirred at a high speed in a homomixer, to obtain pulp-like particles. These pulp-like particles had freeness value of 200 sec.

Example 1

20 Parts of the pulp-like particles of a polymethaphenylene isophthalamide obtained in Preparation 1 were mixed with 80 parts of a fine rock wool fiber (MICROFIBER SIX, manufactured by NITTO BOSEKI) having an average fiber length of 150 μm and an average fiber diameter of 4.1 μm and free from shots. From this mixture was prepared an aqueous dispersion having a solid content of 1%. From the aqueous dispersion was formed a wet paper by the use of a cylinder machine. The wet paper was transferred onto a felt and dehydrated to a water content of 80%.

70 Sheets of the wet paper prepared thus were piled up on a making drum and then were subjected to pressing and drying by the use of a hot press of 3.43 MPa (35 kg/cm$^2$) and 140°C, whereby a cushioning material of the present invention having a board shape of 2.4 mm thickness was produced.

The characteristics of this cushioning material are shown in Table 1.

This board was used as a cushioning material for production of paper-melamine resin laminates. Production conditions of the laminates were 170°C, 7.84 MPa (80 kg/cm$^2$), 40 min heating and 30 min cooling. The board retained its original cushioning properties after 750 times of use.

On the other hand, a cushioning material of kraft paper, when used under the same conditions, lost its cushioning properties after 5 times of use. A cushioning material which was a laminate of a rubber sheet and a woven cloth became unusable after 380 times of use due to severe deterioration of the rubber. A felt-like cushioning material made from a polymethaphenylene isophthalamide fiber showed good cushioning properties up to about 500 times of use, however, this was judged to be a limited use because there were formed some areas of reduced cushioning properties in the cushioning material.

The above indicates that the cushioning board of the present invention possesses a very excellent performance.

TABLE 1

| | | Initial properties | Properties after 750 time of used |
|---|---|---|---|
| Thickness, mm | | 2.45 | 2.20 |
| Density, g/cm$^3$ | | 0.89 | 0.97 |
| Porosity, % | | 65 | 62 |
| Tensile strength, kg/mm$^2$ (MPa) | | 0.98 (9.6) | 0.93 (9.1) |
| Degree of shrinkage upon heating (180°C, 24 hr), % | Machine direction | 0.03 | 0.03 |
| | Cross direction | 0.09 | 0.08 |
| | Thickness direction | −1.34 | −1.42 |
| Degree of compression (when heated to 170°C at 7.84 MPa (80 kg/cm$^2$), % | | 11.95 | 8.63 |
| Residual strain, % | | 6.50 | 2.42 |
| Curling | | No | No |

Example 2

The surfaces and edges of the board of 2.4 mm thickness produced in Example 1 were coated with a thermosetting silicone resin comprised of 100 parts of TOSHIBA SILICONE TSR 114 and 0.5 part of a curing catalyst CR 15, whereby a surface-fortified cushioning material was produced.

This board was used as a cushioning material for production of hard polyvinyl chloride resin sheets. Production conditions were 180°C, 11.76 MPa (120 kg/cm$^2$), 1 hr heating and 50 min cooling. The life of the board was about 500 times. On the other hand, a rubber type cushioning material of conventional use became unusable after 200 times of use due to severe deterioration of the rubber.

Example 3

30 Parts of the pulp-like particles of a polymethaphenylene isophthalamide obtained in Preparation 1 were mixed with 70 parts of a glass chopped fiber having an average fiber length of 500 μ and an average fiber diameter of 9 μm. The mixture was made into an aqueous dispersion having a solid content of 1%. From the aqueous dispersion was formed a wet paper by the use of a cylinder machine. The wet paper was transferred onto a felt and dehydrated to a water content of 75%.

90 Sheets of the wet paper obtained thus were piled up on a making drum and then were subjected to pressing and drying by the use of a hot press of 2.94 MPa (30 kg/cm$^2$) and 130°C, whereby a cushioning material having a board shape of 3.2 mm thickness was produced.

The characteristics of this cushioning material are shown in Table 2.

This cushion was used in a press for production of glass-epoxy resin-copper clad laminates. Production conditions were 165°C, 4.90 MPa (50 kg/cm$^2$), 50 min heating and 40 min cooling.

The life of use was about 700 times and much longer compared with a conventional rubber type cushioning material which deteriorated in 200 times of use.

TABLE 2

| | | Initial properties | Properties after 750 time of used |
|---|---|---|---|
| Thickness, mm | | 3.23 | 2.94 |
| Density, g/cm³ | | 0.85 | 0.93 |
| Porosity, % | | 61.3 | 58.1 |
| Tensile strength, kg/cm² (MPa) | | 1.5 (0.147) | 1.4 (0.137) |
| Degree of shrinkage upon heating (180°C, 24 hr), % | Machine direction | 0.05 | 0.05 |
| | Cross direction | 0.09 | 0.08 |
| | Thickness direction | −1.36 | −1.52 |
| Degree of compression (when heated to 170°C at 4.90 MPa (50 kg/cm), % | | 10.6 | 9.2 |
| Residual strain, % | | 1.7 | 1.4 |
| Curling | | No | No |

Example 4

On the cushioning board obtained in Example 3, there was attached a heat-resistant cloth made of an aromatic polyamide fiber by the use of an aromatic polyamide varnish (A Varnish, manufactured by NIPPON AROMA KK), whereby a surface-fortified cushioning board was obtained.

This board showed a low level of surface wear and gave a prolonged life.

**Claims**

1. A heat-resistant cushioning material for hot press laminating and press molding produced by mixing a fine inorganic fiber essentially free from shots and having fiber diameters of 0.5 to 15 µm and fiber lengths of 70 to 1,000 µm with fibers of a heat-resistant aromatic polymer having a freeness value of 150 to 500 sec, (determined by preparing an aqueous dispersion of the fibers, containing 0.3% of the fibers at 20°C, transferring one liter of said dispersion into a cylindrical vessel of 102 mm inside diameter which has a wire net of 78 mesh at the bottom, and measuring the time required for obtaining 500 ml of a filtrate), making the mixture into an aqueous slurry, making a wet paper from the slurry by a paper-making process, adjusting the water content of the wet paper to 50 to 95%, piling up necessary sheets of the wet paper and subjecting them to dehydration and drying under heating and pressure application to form an integral body.

2. A heat-resistant cushioning material according to Claim 1, wherein the material has a porosity of 50 to 75%.

3. A heat-resistant cushioning material according to Claim 1, wherein on one side or both sides of the material is attached a sheet comprised of a copper clad or foil, an aluminum clad or foil, a heat-resistant unwoven cloth or a releasing layer.

4. A heat-resistant cushioning material according to Claim 1, wherein on one side or both sides of the material is applied a treatment for releasing.

5. A heat-resistant cushioning material according to Claim 1, wherein the material is attached on both sides of a heat-resistant unwoven cloth or a rubber sheet in an integral form.

6. A heat-resistant cushioning material according to Claim 1, wherein the material is coated at the surface thereof with a thermosetting resin for fortification.

7. A heat-resistant cushioning material according to Claim 6, wherein the thermosetting resin is a thermosetting silicone varnish, a polyamide imide varnish, aromatic polyamide varnish.

8. A heat-resistant cushioning material according to Claim 1, wherein to the surface of the material is attached a heat-resistant cloth with an adhesive for fortification.

9. A heat-resistant cushioning material according to Claim 8, wherein the heat-resistant cloth is made of an aromatic polyamide fiber and the adhesive is an aromatic polyamide varnish, polyamide imide varnish or thermosetting silicone varnish.

10. A heat-resistant cushioning material according to Claim 1, wherein the inorganic fiber is selected from the group consisting of rock wools, ceramic fibers and glass fibers.

11. A heat-resistant cushioning material according to Claim 1, wherein the pulp-like particles of a heat-resistant aromatic polymer are composed of an aromatic polyamide and/or an aromatic polyamide-imide.

12. A heat-resistant cushioning material according to Claim 1, wherein the weight ratio of the inorganic fiber to the pulp-like particles of a heat-resistant aromatic polymer is 50:50 to 95:5.

**Patentansprüche**

1. Ein wärmebeständiges Dämpfungsmaterial für Heißpreßlaminierung und Preßverformung, hergestellt durch Vermischen einer feinen anorganischen Faser, die im wesentlichen frei von Schußfäden ist, und die einen Faserdurchmesser von 0,5 bis 15 µm und eine Faserlänge von 70 bis 1,000 µm hat, mit Fasern aus einem wärmebeständigen aromatischen Polymer mit einem Mahlgrad von 150 bis 500 Sekunden (bestimmt durch Herstellung einer wäßrigen Dispersion aus den Fasern, enthaltend 0,3% der Fasern, bei 20°C, Übertragung eines Liters der Dispersion in ein zylindrisches Gefäß mit einem Innendurchmesser von 102 mm mit einem Drahtsieb von 78 mesh am Boden und Messung der Zeit, die erforderlich ist, bis man 500 ml eines Filtrats erhalten hat), Ausbildung einer wäßrigen Aufschlämmung aus der Mischung, Herstellung eines Naßpapiers aus der Aufschlämmung nach einem Papierherstellungsverfahren, Einstellung des Wassergehaltes des feuchten Papiers auf 50 bis 95%, Aufeinanderlegen der erforderlichen Blätter des feuchten Papiers und Unterwerfung desselben unter Dehydratation und Trocknen durch Wärme- und Druckanwendung unter Ausbildung eines zusammenhängenden Körpers.

2. Wärmebeständiges Dämpfungsmaterial gemäß Anspruch 1, bei dem das Material eine Porosität von 50 bis 75% hat.

3. Wärmebeständiges Dämpfungsmaterial gemäß Anspruch 1, bei dem an eine Seite oder beide Seiten des Materials ein Blatt aus einer Kupferplattierung oder -folie, ein wärmebeständiges Vlies oder eine Trennschicht angebracht ist.

4. Wärmebeständiges Dämpfungsmaterial gemäß Anspruch 1, bei dem eine oder beide Seiten des Materials einer Behandlung, die einen Ablösungseffekt bewirkt, unterworfen wurde.

5. Wärmebeständiges Dämpfungsmaterial gemäß Anspruch 1, bei dem das Material an beide Seiten eines wärmebeständigen Vlieses oder eines Kautschukfelles in integraler Form angebracht ist.

6. Wärmebeständiges Dämpfungsmaterial gemäß Anspruch 1, bei dem das Material an seiner Oberfläche mit einem wärmehärtbaren Harz zur Verstärkung beschichtet ist.

7. Wärmebeständiges Dämpfungsmaterial gemäß Anspruch 6, bei dem das wärmehärtende Harz ein wärmehärtbarer Silikonlack, ein Polyamidimidlack oder ein aromatischer Polyamidlack ist.

8. Wärmebeständiges Dämpfungsmaterial gemäß Anspruch 1, bei dem auf die Oberfläche des Materials ein wärmebeständiges Gewebe mit einem Kleber zur Verstärkung angebracht ist.

9. Wärmebeständiges Dämpfungsmaterial gemäß Anspruch 8, bei dem das wärmebeständige Gewebe aus einer aromatischen Polyamidfaser hergestellt ist, und das Klebemittel ein aromatischer Polyamidlack, Polyamidimidlack oder ein wärmehärtender Silikonlack ist.

10. Wärmebeständiges Dämpfungsmaterial gemäß Anspruch 1, bei dem die anorganische Faser ausgewählt ist aus der Gruppe bestehend aus Steinwolle, Keramikfasern und Glasfasern.

11. Wärmebeständiges Dämpfungsmaterial gemäß Anspruch 1, bei dem die pulpeartigen Teilchen des wärmebeständigen aromatischen Polymers sich aus einem aromatischen Polyamid und/oder einem aromatischen Polyamidimid zusammensetzen.

12. Wärmebeständiges Dämpfungsmaterial gemäß Anspruch 1, bei dem das Gewichtsverhältnis von anorganischer Faser zu den pulpeartigen Teilchen des wärmebeständigen aromatischen Polymers 50:50 bis 95:5 beträgt.

**Revendications**

1. Un matériau d'amortissement résistant à la chaleur pour la stratification à chaud sous pression et le moulage sous pression produit par mélange de fibres minérales fines essentiellement dépourvues de grains et ayant des diamètres des fibres de 0,5 à 15 µm et des longueurs des fibres de 70 à 1 000 µm avec des fibres d'un polymère aromatique résistant à la chaleur présentant un indice d'égouttage de 150 à 500 s (déterminé par préparation d'une dispersion aqueuse des fibres contenant 0,3% des fibres à 20°C, transfert d'un litre de ladite dispersion dans un récipient cylindrique de 102 mm de diamètre intérieur, dont le fond est constitué d'un grillage de 78 mesh et mesure du temps nécessaire à l'obtention de 500 ml de filtrat), transformation du mélange en une suspension aqueuse, fabrication d'un papier humide à partir de la suspension selon un procédé de fabrication du papier, ajustement de la teneur en eau du papier humide entre 50 et 95%, superposition des feuilles nécessaires de papier humide et déshydratation et durcissement de celles-ci par application de chaleur et de pression pour former un élément ingégré.

2. Un matériau d'amortissement résistant à la chaleur selon la revendication 1, ce matériau ayant une porosité de 50 à 75%.

3. Un matériau d'amortissement résistant à la chaleur selon la revendication 1, dans lequel à une des faces du matériau ou aux deux est fixée une feuille constituée d'une feuille de placage ou pellicule mince de

cuivre, une feuille de placage ou pellicule mince d'aluminium, un non-tissé résistant à la chaleur ou une couche antiadhésive.

4. Un matériau d'amortissement résistant à la chaleur selon la revendication 1 dans lequel un traitement antiadhésif est appliqué à une des faces du matériau ou aux deux.

5. Un matériau d'amortissement résistant à la chaleur selon la revendication 1, dans lequel, aux deux faces du matériau, un tissu non tissé résistant à la chaleur ou une feuille de caoutchouc est fixé sous une forme intégrée.

6. Un matériau d'amortissement résistant à la chaleur selon la revendication 1 dans lequel le matériau est revêtu sur sa surface d'une résine thermoducissable pour le renforcement.

7. Un matériau d'amortissement résistant à la chaleur selon la revendication 6, dans lequel la résine thermoducissable est un vernis de silicone thermodurcissable, un vernis de polyamide-imide ou un vernis de polyamide aromatique.

8. Un matériau d'amortissement résistant à la chaleur selon la revendication 1, dans lequel un tissu résistant à la chaleur est fixé avec un adhésif à la surface du matériau pour le renforcement.

9. Un matériau d'amortissement résistant à la chaleur selon la revendication 8, dans lequel le tissu résistant à la chaleur est fait de fibres de polyamide aromatique et l'adhésif est un vernis de polyamide aromatique, un vernis de polyamide-imide ou un vernis de silicone thermodurcissable.

10. Un matériau d'amortissement résistant à la chaleur selon la revendication 1, dans lequel les fibres minérales sont choisies dans le groupe constitué par les laines de roche, les fibres de céramique et les fibres de verre.

11. Un matériau d'amortissement résistant à la chaleur selon la revendication 1 dans lequel les particules semblables à de la pâte à papier faites d'un polymère aromatique résistant à la chaleur sont composées d'un polyamide aromatique et/ou d'un polyamide-imide aromatique.

12. Un matériau d'amortissement résistant à la chaleur selon la revendication 1, dans lequel le rapport pondéral des fibres minérales aux particules semblables à de la pâte à papier faites d'un polymères aromatique résistant à la chaleur est de 50/50 à 95/5.